# FASCICULE DE BREVET EUROPEEN

(11) **EP 0 392 955 B1**
(45) Date de publication et mention de la délivrance du brevet: **26.10.1994**
(21) Numéro de dépôt: 90500019.6
(22) Date de dépôt: 26.02.1990
(51) Int. Cl.: H01R 25/16, H02G 3/18

(54) **Boîtier pour le logement de mécanismes électriques**
Behälter zum Unterbringen von elektrischen Apparaten
Box for the housing of electrical devices

(30) Priorité: 14.04.1989 ES 8901307
(43) Date de publication de la demande: 17.10.1990
(73) Titulaire: APARELLAJE ELECTRICO, S.A., E-08029 Barcelona (ES)
(72) Inventeur: Benito Navazo, Juan Manuel, E-08017 Barcelona (ES)
(74) Mandataire: Curell Sunol, Jorge

(56) Documents cités:
- DE-A- 3 536 623
- DE-U- 7 728 373
- FR-A- 2 402 957

## Description

La présente invention se rapporte à un boîtier destiné au logement de mécanismes électriques, pouvant être installé dans des chemins de câble ou canalisations pour conducteurs électriques ou similaires qui comprennent un fond sur lequel sont agencées au moins une première et une seconde saillie en forme de harpon et orientées en opposition l'une de l'autre, et qui sont rendues solidaires du fond par au moins une nervure, le boîtier comportant une embase et de parois latérales.

En particulier, ces mécanismes sont ceux habituellement destinés à des fonctions de connexion, d'interruption, de dérivation ou de protection dans des installations électriques, téléphoniques, informatiques et autres, disposées dans des canalisations munies d'un couvercle et fixées sur des murs ou autres parements.

On connaît différentes réalisations de ce type de boîtiers. Ainsi, dans le Modèle d'Utilité Espagnol n° 206.123, il est fait état d'un boîtier destiné à être placé dans des canalisations dont la paroi de fond présente des cannelures longitudinales en forme de T, tandis que le boîtier présente dans son fond des fentes alignées entre elles à travers lesquelles passent les extrémités coudées d'une pièce de fixation pour l'accrochage dans les rainures précitées, et de façon que le bord de cette pièce, opposé auxdites extrémités coudées s'engage dans une languette élastique dérivée d'une paroi latérale du boîtier. Cette solution a pour inconvénient de nécessiter la présence de deux éléments à assembler.

Dans le Modèle d'Utilité Espagnol n° 223.179, il est décrit un boîtier qui comporte dans son embase des rainures alignées de part et d'autre du centre de l'embase elle-même, rainures qui possèdent de chaque côté une ailette souple et dans lesquelles pénètre un bloc réuni au boîtier au moyen d'une fine lame du type charnière de torsion angulaire permettant de faire basculer le bloc à la manière d'un levier et d'une cale. Dans ce cas, on n'obtient pas la fixation stable nécessaire du boîtier par rapport à la canalisation.

Dans le Modèle d'Utilité Espagnol n° 224.727, un boîtier comporte dans son fond une bride faisant saillie pour la fixation par insertion élastique de façon commode et coulissante dans un support de guidage situé dans l'embase de la canalisation, ainsi qu'une ouverture par laquelle s'engage un élément mobile muni d'un bord à angle saillant flanqué d'un côté également en saillie, tandis que l'autre flanc forme une protubérance avec des ailettes pour la fixation dans l'ouverture précitée, comportant en plus de cet élément mobile un orifice arrière pour son extraction par action de levier. Ce mode de réalisation présente l'inconvénient d'une manoeuvrabilité difficile de l'élément mobile depuis l'extérieur du boîtier.

Dans FR-A-2402957, il est décrit un boîtier dans le fond duquel est pratiquée une fente en correspondance avec un guidage en forme de T de l'embase d'une canalisation, ce fond comportant une plaque métallique rabattable munie d'un coude qui pénètre par la fente et s'engage dans la rainure du boîtier, cette plaque étant maintenue sous une languette dérivée d'une paroi du boîtier. De plus, la plaque métallique mentionnée ci-dessus est munie d'une protection isolante formée par une feuille souple dérivée du boîtier par un bord de sa fente. Ce mode de réalisation présente l'inconvénient de posséder une constitution extrêmement complexe qui n'apporte aucune amélioration à la fixation du boîtier dans la canalisation.

Avec le boîtier selon l'invention, il est prévu d'éliminer les inconvénients signalés pour les différentes réalisations connues et d'en simplifier l'exécution.

Ce but est atteint grâce à un boîtier du type indiqué en tête de la description, lequel boîtier est caractérisé en ce qu'il est formé par une pièce unique qui comprend : des pieds servant à l'appui sur le fond de la canalisation ; un appendice fixe de positionnement pouvant s'appliquer dans la partie inférieure sur la première saillie en forme de harpon ; une ouverture dans cette embase qui définit un premier et un second bords, opposés entre eux ; un premier rebord contigu au premier bord qui présente des premiers moyens d'encastrement ; un second rebord contigu au second bord ; et une ailette de fermeture, réunie au moyen d'une articulation au second rebord, avec possibilité de basculement entre une position inférieure d'encastrement et une position supérieure libre, cette ailette comprenant à son tour : un tronçon supérieur muni de seconds moyens d'encastrement, complémentaires aux premiers moyens d'encastrement, aptes conjointement à maintenir cette ailette de façon amovible dans la position inférieure d'encastrement ; et un tronçon inférieur muni d'un appendice de retenue pouvant s'appliquer dans la partie inférieure de la seconde saillie en forme de harpon lorsque l'ailette se trouve dans la position inférieure d'encastrement.

D'autres avantages et caractéristiques de l'invention ressortent de la description suivante, dans laquelle sans aucun caractère limitatif est décrit un mode de réalisation préféré de l'invention, avec référence aux dessins d' accompagnement qui représentent :
- la figure 1, une coupe transversale d'une canalisation pour conducteurs électriques contenant le boîtier conforme à l'invention ;
- la figure 2, une vue en plan supérieure du boîtier, l'ailette se trouvant dans sa position supérieure libre ;
- la figure 3, une vue en élévation du boîtier ;
- la figure 4, une coupe partielle selon la ligne IV/IV de la figure 2, cette coupe représentant également le fond de la canalisation ;
- la figure 5, une coupe analogue à la précédente avec l'ailette dans sa position inférieure d'encastrement ;
- les figures 6 et 7 sont des vues en perspective à travers un plan vertical, correspondant respectivement aux représentations des figures 4 et 5.

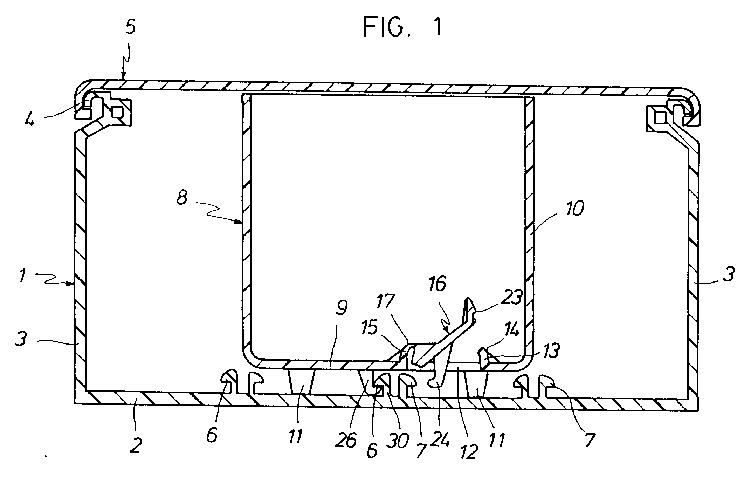

A la figure 1, on peut observer une canalisation 1 destinée à des conducteurs électriques ou similaires, qui comprend un fond 2 et des parois latérales 3 munies d'ailettes supérieures 4 pour l'accrochage d'un couvercle 5 qui présente une configuration propice à l'accrochage.

Le fond 2 de la canalisation 1 présente, sous une forme connue en elle-même, une pluralité de premières saillies 6 en forme de harpon et de secondes saillies 7 en forme de harpon, orientées par paires en regard l'une de l'autre ; chaque paire de saillies en forme de harpon 6, 7 est solidaire du fond 2 par une nervure commune ou encore comme cela est représenté par une nervure 30 pour chaque saillie.

Le boîtier 8 conforme à l'invention est constitué d'une pièce unique, de préférence obtenue par moulage ; il comprend une embase 9 et des parois latérales 10 et cette embase dispose de pieds 11 pour l'appui sur le fond 2 de la canalisation 1.

L'embase comprend également une ouverture 12, de préférence rectangulaire et qui définit un premier bord 12a et un second bord 12b, opposés entre eux et de préférence également parallèles entre eux. De façon immédiatement contiguë au premier bord 12a, un premier rebord 13 dans lequel sont prévus des premiers moyens d'encastrement, de préférence constitués par une dent 14 disposée horizontalement et parallèlement à l'embase 9.

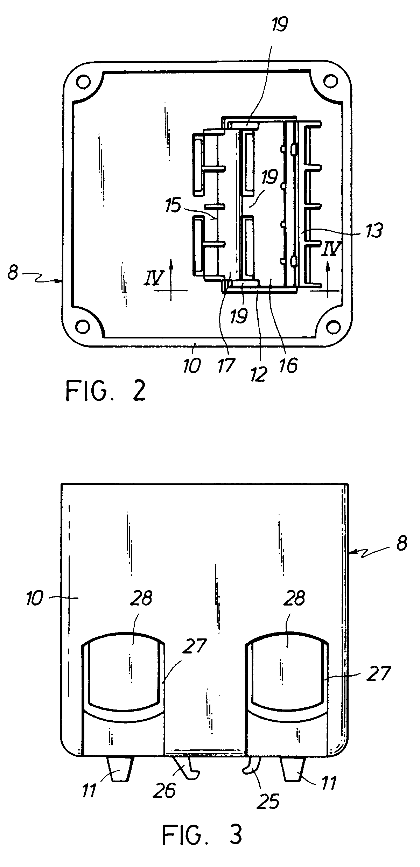

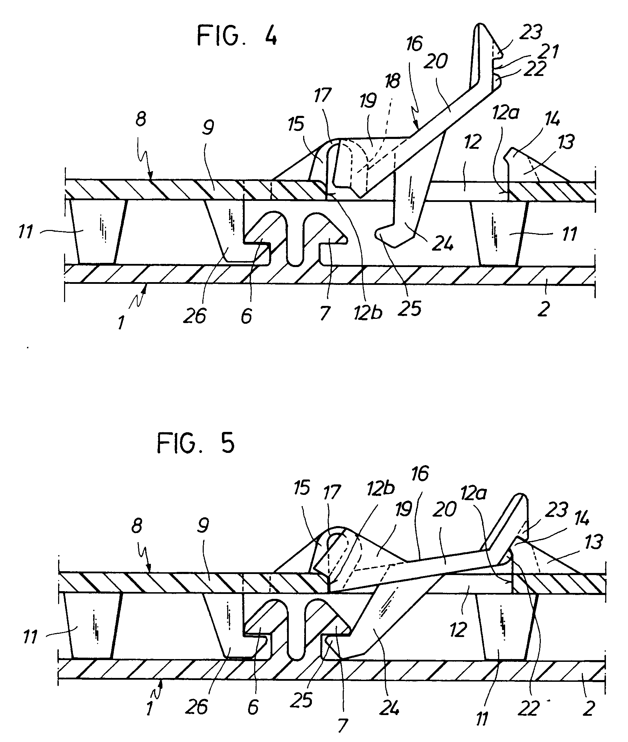

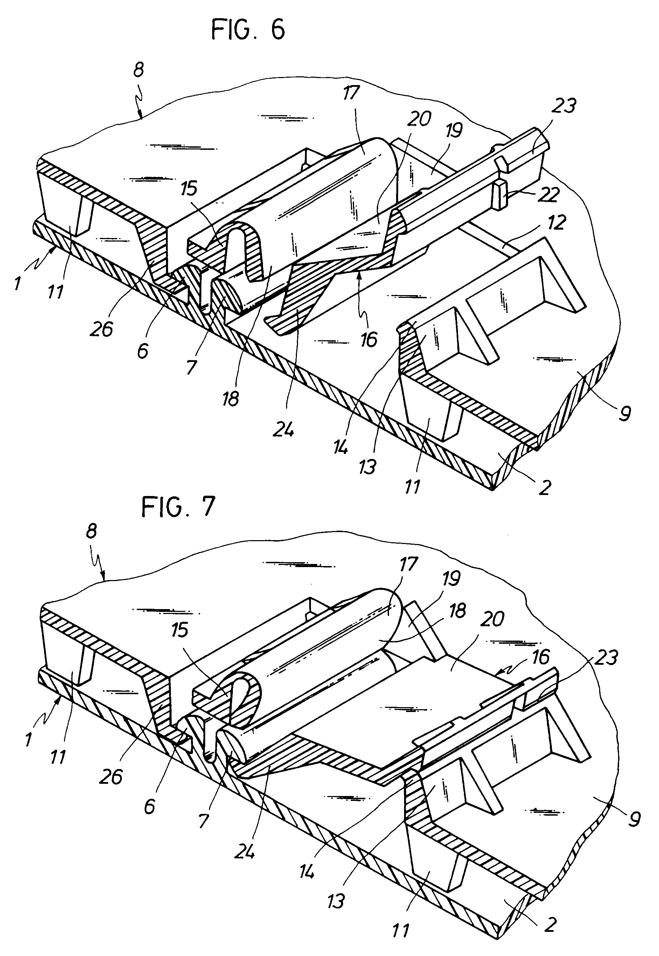

Egalement de façon contiguë au second bord 12b, est prévu un second rebord 15 qui est réuni à une ailette de fermeture 16 au moyen d'une articulation qui permet à l'ailette 16 de basculer entre une position supérieure libre (figures 1, 2, 4 et 6) et une position inférieure d'encastrement (figures 5 et 7). De préférence, cette articulation comprend une lame arquée 17 dont la faible épaisseur lui assure la souplesse nécessaire ; cette lame 17 fait partie intégrante de la pièce constitutive du boîtier 8 et s'étend entre le second rebord 15 et un élément aplati 18 qui est rendu solidaire de l'ailette 16 au moyen de supports 19.

L'ailette de fermeture 16 comprend un tronçon supérieur 20 ou patte dans laquelle se trouvent des seconds moyens d'encastrement complémentaires aux premiers moyens mentionnés précédemment. De préférence, ces seconds moyens d'encastrement comprennent un logement 21 pour la dent 14 ; sous ce logement est prévu un téton 22 dont la surface frontale peut glisser devant la dent 14 pour se retrouver sous celle-ci dans la position d'encastrement ; au-dessus du logement 21 est prévue une bride 23 qui lorsqu'elle vient en contact avec la dent 14, sert à limiter le basculement.

L'ailette comprend de plus un tronçon inférieur 24 ou bras mobile qui comporte un appendice de retenue 25. Lorsque l'ailette se trouve dans sa position inférieure d'encastrement, cette appendice 25 vient s'appliquer sur la face inférieure de la seconde saillie en forme de harpon 7.

A partir de la face inférieure de l'embase 8, un appendice fixe 26 de position fait saillie vers le bas qui à son tour est apte à s'appliquer sur la face inférieure de la première saillie en forme de harpon 6.

Pour permettre l'accès aux conducteurs électriques situés à l'intérieur du boîtier 8, ce dernier comporte dans ses parois latérales 10 des fenêtres 27 qui sont partiellement couvertes de fines lames souples 28 pouvant se rompre facilement et permettre l'accès en question.

La description ci-dessus fait apparaître de façon évidente le mode de fixation du boîtier 8 dans la canalisation 1. L'ailette 16 étant dans la position supérieure libre, on pose le boîtier 8 sur une paire de saillies 6 et 7 pour que le pied 11 vienne en appui sur le fond 2 et on déplace légèrement le boîtier 8 dans le sens transversal jusqu'à ce que l'appendice fixe 26 de positionnement se trouve sous l'une des saillies en forme de harpon 6 ou 7 ; on fait ensuite basculer l'ailette de fermeture 16 jusqu'à la position inférieure d'encastrement pour que le téton 22 passe au-dessus de la dent 14, opération qui est facilitée par la grande souplesse de l'ailette 16. En même temps, l'appendice de retenue 25 demeure appliqué en pression contre l'autre saillie en forme de harpon 7 ou 6 (c'est-à-dire celle qui n'a pas été mise en contact avec l'appendice fixe 26). De cette manière, on obtient une fixation efficace entre la canalisation 1 et le boîtier 8, sans empêcher un coulissement dans le sens longitudinal des nervures 30. On peut facilement défaire cette fixation en faisant basculer de nouveau l'ailette vers la position supérieure libre.

## Revendications

1. Boîtier destiné au logement de mécanismes électriques, installable dans des chemins de câble ou canalisations (1) pour conducteurs électriques ou similaires qui comprennent un fond (2) en relation avec lequel il est au moins prévu une première (6) et une seconde saillies (7) en forme de harpon et orientées en relation opposée, rendues solidaires du fond (2) par au moins une nervure (30), le boîtier comportant une embase (9) et des parois latérales (10), caractérisé en ce qu'il est constitué d'une pièce unique qui comprend : des pieds (11) servant à l'appui sur le fond (2) de la canalisation (1) ; un appendice fixe (26) de positionnement pouvant s'appliquer dans la partie inférieure sur la première saillie en forme de harpon (6) ; une ouverture (12) dans l'embase (9) définissant un premier (12a) et un second bords (12b), opposés entre eux ; un premier rebord (13) contigu au premier bord (12a) qui présente des premiers moyens d'encastrement (14) ; un second rebord (15) contigu au second bord (12b) ; et une ailette de fermeture (16), réunie au moyen d'une articulation au second rebord (12b), avec une possibilité de basculement entre une position inférieure d'encastrement et une position supérieure libre, l'ailette (16) comprenant à son tour : un tronçon supérieur ou patte (20) muni de seconds moyens d'encastrement (21), complémentaires des premiers moyens d'encastrement (14) pouvant conjointement maintenir de façon amovible cette ailette (16) dans la position inférieure d'encastrement ; et un tronçon inférieur ou bras mobile (24) muni d'un appendice de retenue (25) pouvant s'appliquer dans la partie inférieure sur la seconde saillie en forme de harpon (7) lorsque l'ailette (16) se trouve dans la position inférieure d'encastrement

2. Boîtier selon la revendication 1, caractérisé en ce que les premiers moyens d'encastrement comprennent une dent (14) et les seconds moyens d'encastrement définissent un espace de logement (21) pour la dent (14), une bride (23) étant prévue dans l'ailette (16) pour limiter le basculement.

3. Boîtier selon la revendication 1 ou 2, caractérisé en ce que l'articulation comprend une lame (17) arquée et souple, de faible épaisseur, faisant partie intégrante de la pièce unique.

4. Boîtier selon la revendication 3, caractérisé en ce que la lame (17) s'étend entre le second rebord (15) et un élément aplati (18) rendu solidaire de l'ailette (16) par des supports (19).

5. Boîtier selon l'une des revendications précédentes, caractérisé en ce que les parois latérales (10) du boîtier (8) présentent des fenêtres (27) partiellement couvertes de lames (28) fines et souples.

## Patentansprüche

1. Gehäuse, das dazu bestimmt ist, elektrische Mechanismen aufzunehmen, das in Kabelwegen oder Kanälen (1) für elektrische Leiter oder Ähnliches installierbar ist, das einen Boden (2) aufweist, in Beziehung mit dem zumindest ein erster (6) und ein zweiter (7) Vorsprung in Form eines Gabelankers vorgesehen ist, die in einander entgegengesetzter Beziehung orientiert sind, und die fest mit dem Boden (2) durch zumindest eine Rippe (30) verbunden sind, wobei das Gehäuse eine Basisplatte (9) und seitliche Wände (10) aufweist,
**dadurch** **gekennzeichnet,** **daß**
es aus einem einzigen Teil gebildet ist, das aufweist:
Füße (11), die zur Abstützung auf dem Boden (2) des Kanales (1) dienen; ein fester Ansatz (26) zum Positionieren, der in dem unteren Teil auf den ersten Vorsprung in Form eines Gabelankers (6) drücken kann, eine Öffnung (12) in der Basisplatte (9), die einen ersten (12a) und einen zweiten (12b) Rand definiert, die aneinander entgegengesetzt sind; ein erster umgebogener Rand (13), der an den ersten Rand (12a) anstößt, der erste Einrichtungen zum Einfügen (14) aufweist; ein zweiter umgebogener Rand (15), der an den zweiten Rand (12b) anstößt; und
ein Verschlußflügel (16), der mit Hilfe eines Gelenkes mit dem zweiten umgebogenen Rand (12b) verbunden ist, mit einer Möglichkeit des Schwenkens zwischen einer unteren Position des Einfügens und einer oberen freien Position, wobei der Flügel (16) wiederum aufweist: einen oberen Abschnitt oder eine Klaue (20), die mit zweiten Einrichtungen zum Einfügen (21) versehen ist, die komplementär zu den ersten Einrichtungen zum Einfügen (14) sind, und die zusammen auf entfernbare Weise diesen Flügel (16) in der unteren Position des Einfügens halten können; und einen unteren Abschnitt oder beweglichen Arm (24), der mit einem Ansatz zum Zurückhalten (25) versehen ist, der in dem unteren Teil auf den zweiten Vorsprung in Form eines Gabelankers (7) drücken kann, wenn der Flügel (16) sich in der unteren Position des Einfügens befindet.

2. Ein Gehäuse gemäß Anspruch 1, dadurch gekennzeichnet, daß die ersten Einrichtungen zum Einfügen einen Zahn (14) aufweisen und daß die zweiten Einrichtungen zum Einfügen einen Aufnahmeraum (21) für den Zahn (14) definieren, wobei ein Flansch (23) in dem Flügel (16) vorgesehen ist, um das Schwenken zu begrenzen.

3. Ein Gehäuse gemäß Anspruch 1 oder 2, dadurch gekennzeichnet, daß das Gelenk ein gebogenes und nachgiebiges Plättchen (17) aufweist, das von geringer Dicke ist und integraler Teil des einzigen Teiles ist.

4. Gehäuse gemäß Anspruch 3, dadurch gekennzeichnet, daß das Plättchen (17) sich zwischen dem zweiten umgebogenen Rand (15) und einem abgeflachten Element (18) erstreckt, das fest mit dem Flügel (16) durch Träger (19) verbunden ist.

5. Gehäuse gemäß einem der vorhergehenden Ansprüche, dadurch gekennzeichnet, daß die seitlichen Wände (10) des Gehäuses (8) Fenster (27) aufweisen, die teilweise mit feinen und nachgiebigen Blättern (28) bedeckt sind.

## Claims

1. Box intended for housing electrical devices, installable in cableways or ducts (1) for electrical conductors or the like which comprise a bottom (2) in relation to which are provided at least first (6) and second (7) harpoon-shaped projections facing in opposite directions, fixed to the bottom (2) by means of at least one rib (30), the box having a base (9) and lateral walls (10), characterised in that it is formed in a single piece which comprises: feet (11) supporting it on the bottom (2) of the duct (1); a fixed locating appendage (26), the bottom part of which can be applied to the first harpoon-shaped projection (6); an opening (12) in the base (9) defining first (12a) and second (12b) edges, opposite each other; a first shoulder (13) contiguous with the first edge (12a) and which has first slotting-in means (14); a second shoulder (15) contiguous with the second edge (12b); and a closure lug (16), connected to the second shoulder (12b) by means of a pivot, with a facility to tilt between a bottom slotting-in position and a top free position, the lug (16) in its turn comprising: a top section or hook (20) provided with second slotting-in means (21) complementary to the first slotting-in means (14) and which can together keep this lug (16) removably in the bottom slotting-in position; and a bottom length or movable arm (24) provided with a retaining appendage (25), the bottom part of which can be applied to the second harpoon-shaped projection (7) when the lug (16) is in the bottom slotting-in position.

2. Box according to Claim 1, characterised in that the first slotting-in means comprise a tooth (14) and the second slotting-in means define a housing space (21) for the tooth (14), a flange (23) being provided in the lug (16) for limiting the tilting.

3. Box according to Claim 1 or 2, characterised in that the pivot comprises a thin, curved, flexible blade (17) forming an integral part of the single piece.

4. Box according to Claim 3, characterised in that the blade (17) extends between the second shoulder (15) and a flattened member (18) fixed to the lug (16) by supports (19).

5. Box according to one of the preceding claims, characterised in that the lateral walls (10) of the box (8) have apertures (27) partially covered with thin flexible sheets (28).
